# EUROPEAN PATENT APPLICATION

(11) **EP 0 920 199 A2**
(43) Date of publication of application: **02.06.1999**
(21) Application number: 98121453.9
(22) Date of filing: 11.11.1998
(51) Int. Cl.: H04N 5/775

(54) **Antenna booster circuit for VTR**

(30) Priority: 28.11.1997 JP 344559/97
(71) Applicant: Mitsumi Electric Company Ltd., Chofu-shi Tokyo (JP)
(72) Inventor: Takizawa, Akio c/o Mitsumi Electric Co., Ltd., Atsugi-shi Kanagawa (JP); Sawada, Satoru Mitsumi Electric Co., Ltd., Atsugi-shi Kanagawa (JP)
(74) Representative: Grünecker, Kinkeldey, Stockmair & Schwanhäusser Anwaltssozietät

(57) **Abstract**

An antenna booster circuit for VTR which includes an antenna input terminal (1) into which an antenna input signal, a TV output terminal (5) and a VTR output terminal is disclosed. The antenna booster circuit comprises a booster amplifier (2) for amplifying the antenna input signal input from the antenna input terminal (1), a power supply (+B) for the booster amplifier (2), a distributor (3) for distributing the signal amplified by the booster amplifier (2) to the TV output terminal (5) and the VTR output terminal, a first switch (11) provided between the antenna input terminal (1) and the booster amplifier (2), a second switch (12) provided between the booster amplifier (2) and the distributor (3), a signal bypass circuit (13) connected in parallel with the booster amplifier (2), and a control circuit (14) for controlling the first and second switches (11, 12) so that a signal path includes the booster amplifier (2) when the power supply (+B) is in an on state, and so that the signal path includes the signal bypass circuit (13) when the power supply (+B) is in an off state.

## Description

### BACKGROUND OF THE INVENTION

The present invention relates to an antenna booster disposed in a VTR which is connected between a TV receiving antenna and a TV receiver.

A VTR (video tape recorder) is connected between a TV (television) receiving antenna and a TV receiver. The VTR comprises a booster amplifier for amplifying a received high frequency signal, a tuner section for demodulating a high frequency output signal of the booster amplifier into a video signal, a record/play-back section for recording and playing back the video signal output from the tuner section, a modulator section for converting a played-back signal output from the record/reproduction section into a high frequency signal, and so on.

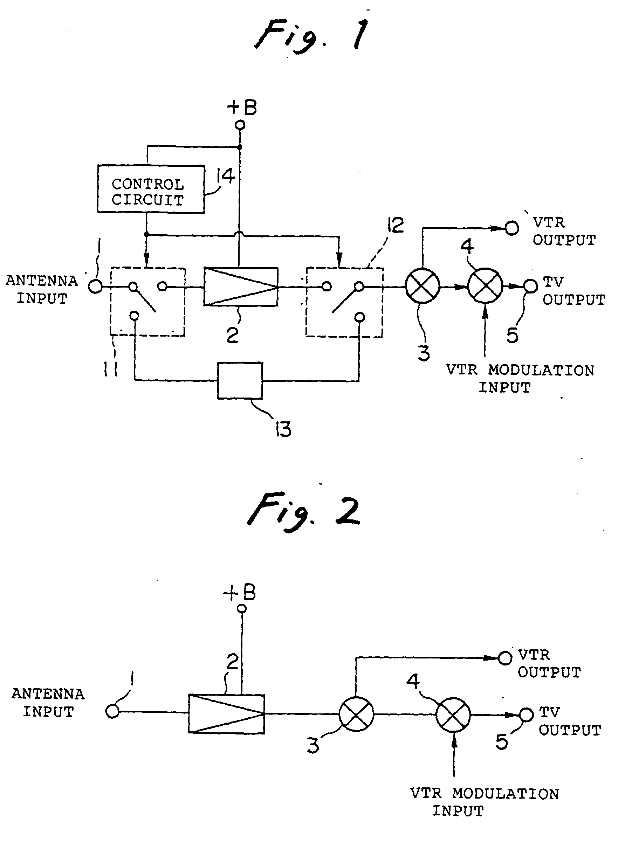

A circuit including the booster amplifying, distributing, mixing and other functions is called an antenna booster circuit in distinction from the tuner circuit. Fig. 2 shows in block diagram showing a conventional antenna booster circuit. In the figure, the reference numerals designates as follows: 1 is an antenna input terminal connected to a TV receiving antenna; 2 is a booster amplifier; 3 is a distributor; 4 is a mixer; 5 is a TV output terminal connected to the antenna input terminal of a TV receiver; and +B is a power supply for the booster amplifier 2.

The booster amplifier 2 receives a high frequency signal (TV broadcasting carrier wave signal) from the antenna input terminal 1, and amplifies it for transmission to the tuner section of the VTR. The distributor 3 receives an output signal of the booster amplifier 2 and outputs it to the tuner section and one of the input terminals of the mixer 4. In Fig. 2, the output signal of the distributor 3 to be transmitted to the tuner section is denoted as a VTR output signal. The tuner section demodulates the high frequency signal output from the distributor 3 into a video signal, and records it into a video tape. The video signal is reproduced by the VTR, and modulated again into a high frequency signal for the TV receiver. The high frequency signal (VTR modulation signal) output from the VTR is input to the other input terminal of the mixer 4.

To receive a TV broadcasting by use of a TV receiver in a usual manner that the VTR is connected between the TV receiving antenna and the TV receiver, a power supply to the VTR must be placed in an on state. This method has widely been adopted without any doubt, however, at this time an actual situation needs no VTR.

However, since the booster amplifier 2 is a part of the internal circuit of the VTR, the power supply to the booster amplifier 2 is turned on and off by a power switch of the VTR. Therefore, if the power switch of the VTR is turned off, the antenna input signal to the TV receiver is also turned off in the situation requiring no VTR. Therefore, the TV receiver must be operated in a state that the power supply of the VTR is in the on state. Since the booster amplifier consumes much power, the TV receiver must be operated while much electric power is uselessly consumed. The conventional antenna booster circuit thus arranged should be improved from the viewpoint of the power saving.

In a VTR of the type which utilizes a service, for example, VPS (video programming system), which enables the VTR automatically changes its timer recording time while following a change of a broadcasting start time, in accordance with information of the broadcasting start time, in order to receive a VPS signal, it is necessary to constantly supply an antenna input signal to the VTR tuner section. Also at this time, a power source must be supplied to the booster amplifier. This power supplying should also be avoided from the power saving viewpoint. The solution of those problems on the power saving is proposed by the present invention.

### SUMMARY OF THE INVENTION

Accordingly, an object of the present invention is to provide an antenna booster circuit which is capable of supplying an antenna input signal for a VTR to the TV receiver and the VTR tuner section even in a condition that the power supply of the booster amplifier within the VTR is in an off state.

In order to achieve the above object, there is provided an antenna booster circuit for VTR which includes an antenna input terminal into which an antenna input signal, a TV output terminal and a VTR output terminal, the antenna booster circuit comprises: a booster amplifier for amplifying the antenna input signal input from the antenna input terminal; a power supply for the booster amplifier; a distributor for distributing the signal amplified by the booster amplifier to the TV output terminal and the VTR output terminal; a first switch provided between the antenna input terminal and the booster amplifier; a second switch provided between booster amplifier and the distributor; a signal bypass circuit connected in parallel with the booster amplifier; and a control circuit for controlling the first and second switches so that a signal path includes the booster amplifier when the power supply is in an on state, and so that the signal path includes the signal bypass circuit when the power supply is in an off state.

In the circuit, it may be constituted that the control circuit automatically detects the on/off state of the power supply to control the first and second switches.

### BRIEF DESCRIPTION OF THE DRAWINGS

In the accompanying drawings:
Fig. 1 is a block diagram showing an antenna booster circuit for VTR of one embodiment according to the present invention; and
Fig. 2 shows in block diagram showing one example of a conventional antenna booster circuit.

### DETAILED DESCRIPTION OF THE PREFERRED EMBODIMENT

The preferred embodiment of the present invention will be described in detail with reference to the accompanying drawing. Fig. 1 is a block diagram showing an antenna booster circuit for VTR of one embodiment according to the present invention. As shown, the antenna booster circuit includes a booster amplifier 2, a distributor 3 and a mixer 4, all of which are arranged between an antenna input terminal 1 and a TV output terminal 5. The booster amplifier 2 amplifies a signal derived from the antenna input terminal 1. The distributor 3 receives an output signal of the booster amplifier and distributes the output signal to the TV output terminal and a tuner section of the VTR. The mixer 4 supplies a high frequency VTR input signal modulated by a reproduced video signal derived from the VTR and an output signal for the TV output terminal to the TV output terminal 5.

The antenna booster circuit further comprises a first switch 11 provided in an input stage of the booster amplifier 2 and a second switch 12 provided in an output stage thereof; a signal bypass circuit 13 connected to the booster amplifier 2 in parallel; and a control circuit 14. The control circuit 14 controls the first and second switches 11 and 12 so that the signal flows into the booster amplifier 2 when a power supply +B for the booster amplifier 2 is in an on state, and so that the signal flows into the signal bypass circuit 13 when the power supply +B is in an off state.

The signal bypass circuit 13 directly supplies a high frequency signal from the antenna input terminal 1 to the distributor 3. In this state where the signal bypass circuit 13 is active, the output signal of the distributor 3 is low in signal level since it is not amplified by the booster amplifier 2, however, no problem arises since the TV receiver has an amplifier in the input stage thereof. During when the signal path including the signal bypass circuit 13 is selected by the first and second switches 11 and 12, a power supply of the booster amplifier 2, or the power supply +B of the VTR, is in an off state. Therefore, if the output level of the distributor 3 is low, no problem arises in the VTR.

In a state that a VPS mode is set up in the VTR, even if the power supply of the VTR is in an off state and the power supply of the booster amplifier 2 is in an off state, the antenna booster circuit is in a VPS-reception ready mode where the VTR tuner and the VPS circuit (not shown) are active. Even in this case, the VTR tuner can receive a VPS signal if the signal path including the signal bypass circuit 13 is selected by the first and second switches 11 and 12. At this time, the booster amplifier 2 is in an off state and the output signal level of the distributor 3 is low, however, the low output signal level arises no problem for the VPS signal reception by the VTR.

The control circuit 14 detects a state of power supply +B and automatically controls the operations of the first and second switches 11 and 12. Therefore, if the power supply +B is turned on, the control circuit 14 causes the first and second switches 11 and 12 to set up the signal path including the booster amplifier 2. As a result, the distributor 3 produces a high level signal suitable for the VTR tuner.

As has been described heretofore, the present invention successfully provides an antenna booster circuit which is capable of supplying an antenna input signal for a VTR to the TV receiver and the VTR tuner section in a condition that the power supply for the booster amplifier within the VTR is in an off state.

## Claims

1. An antenna booster circuit for VTR which includes an antenna input terminal (1) into which an antenna input signal, a TV output terminal (5) and a VTR output terminal, the antenna booster circuit comprising:
a booster amplifier (2) for amplifying the antenna input signal input from the antenna input terminal (1);
a power supply (+B) for the booster amplifier (2);
a distributor (3) for distributing the signal amplified by the booster amplifier (2) to the TV output terminal (5) and the VTR output terminal;
a first switch (11) provided between the antenna input terminal (1) and the booster amplifier (2);
a second switch (12) provided between the booster amplifier (2) and the distributor (3);
a signal bypass circuit (13) connected in parallel with the booster amplifier (2); and
a control circuit (14) for controlling the first and second switches (11, 12) so that a signal path includes the booster amplifier (2) when the power supply (+B) is in an on state, and so that the signal path includes the signal bypass circuit (13) when the power supply (+B) is in an off state.

2. The antenna booster circuit as set forth in claim 1, wherein the control circuit (14) automatically detects the on/off state of the power supply (+B) to control the first and second switches (11, 12).
